# FASCICULE DE BREVET EUROPEEN

(11) **EP 3 153 742 B1**
(45) Date de publication et mention de la délivrance du brevet: **15.04.2020**
(21) Numéro de dépôt: 16192471.7
(22) Date de dépôt: 05.10.2016
(51) Int. Cl.: F16H 1/22, H01Q 1/12, F16H 35/10, F16D 47/02, F16D 7/00, F16D 41/00

(54) **STRUCTURE DE RADAR**
RADARSTRUKTUR
RADAR STRUCTURE

(30) Priorité: 07.10.2015 FR 1502090
(43) Date de publication de la demande: 12.04.2017
(73) Titulaire: Thales, 92400 Courbevoie (FR)
(72) Inventeur: CAUMETTE, Laurent, 91470 LIMOURS (FR); BARBIER, Nicolas, 91470 LIMOURS (FR); DECHERAT, Bastien, 91470 LIMOURS (FR)
(74) Mandataire: Lavoix

(56) Documents cités:
- CN-U- 203 910 968
- FR-A1- 2 319 810
- US-A- 4 848 507
- US-A1- 2012 045 335

## Description

La présente invention concerne une structure de radar.

Plus particulièrement, l'invention se rapporte à une telle structure de radar, qui comporte au moins deux motoréducteurs associés, à travers des moyens de liaison, à une structure d'aérien radar.

Une telle structure d'aérien peut également être communément appelée « antenne radar » dans ce domaine.

De façon classique, chaque motoréducteur comporte par exemple un pignon associé à une roue dentée commune d'entrainement de la structure d'aérien.

Bien entendu d'autres moyens peuvent être envisagés.

Cette roue dentée commune est reliée à la structure d'aérien radar pour accoupler chaque motoréducteur et cette structure d'aérien et donc la faire tourner.

Il est à noter que cette structure d'aérien doit avoir une vitesse de rotation constante malgré les efforts qui s'appliquent sur celle-ci.

Ces efforts sont par exemple des efforts engendrés par le vent, et qui peuvent se traduire par un couple positif ou négatif sur l'axe de rotation de celle-ci.

Les deux motoréducteurs permettent alors d'assurer une redondance en cas de défaillance de l'un de ces motoréducteurs.

Cependant, en cas de blocage de l'un des motoréducteurs, comme par exemple en cas de grippage ou de casse, etc..., toute la chaîne cinématique est bloquée et la rotation de la structure d'aérien est interrompue.

La redondance de la motorisation de la structure, n'est donc pas assurée dans ce cas.

Par ailleurs, en cas de blocage d'un motoréducteur, le mécanisme d'entraînement est probablement endommagé.

On a déjà proposé dans l'état de la technique, différentes solutions pour désaccoupler un motoréducteur ou un moteur en cas de surcharge.

C'est ainsi que l'on connaît dans l'état de la technique et de façon générale, des moyens à limiteur de couple à billes ou à friction, des pions sécables ou encore des arbres sécables, etc...

Cependant ces différentes solutions ne répondent pas aux problèmes posés dans l'application particulière.

En effet il est nécessaire de désaccoupler les moteurs en cas de blocage de la structure d'aérien.

Il est requis que lorsque l'un des deux motoréducteurs se bloque, celui-ci soit désaccouplé et pas le deuxième, qui peut alors continuer à fonctionner.

Dans le cas d'un blocage instantané, alors que la structure d'aérien est en rotation, un tel système peut suffire, car l'inertie de la structure d'aérien crée un couple plus important sur l'arbre du motoréducteur bloqué, ce qui permet de différencier le motoréducteur à désaccoupler.

Mais dans le cas d'un blocage progressif, on se trouve en face d'une probabilité de 50% de risques de désaccoupler le mauvais motoréducteur.

Il existe également dans l'état de la technique, des moyens d'accouplement, dits à roue libre, pour ce type d'applications et qui permettent dans le cas du blocage d'un motoréducteur, de le désaccoupler.

Cependant cette solution n'est pas non plus utilisable dans l'application envisagée, car la structure d'aérien est soumise à des efforts liés au vent, qui peuvent générer des couples positifs ou négatifs sur la roue dentée.

Un tel système désaccouplerait alors les deux motoréducteurs si le couple généré par la structure d'aérien, devenait moteur.

CN 203 910 968 U divulgue une structure de radar selon le préambule de la revendication 1.

Le but de l'invention est donc de résoudre ces problèmes.

A cet effet l'invention a pour objet une structure de radar du type comportant au moins deux motoréducteurs associés à travers des moyens de liaison à une structure d'aérien radar, caractérisée en ce que les moyens de liaison comprennent pour chaque motoréducteur, des moyens d'accouplement à roue libre fonctionnant en parallèle avec des moyens à limiteur de couple à débrayage.

Suivant d'autres caractéristiques de la structure selon l'invention, prises seules ou en combinaison :
- les moyens à roue libre sont adaptés pour passer un premier couple (C1) correspondant au couple moteur maximum et les moyens à limiteur de couple à débrayage permettent de passer un deuxième couple (C2) correspondant au couple fonctionnel maximum, avec le deuxième couple inférieur au premier couple ;
- les moyens de liaison comprennent en outre un pignon pour chaque motoréducteur, associé à une roue dentée commune, reliée à la structure d'aérien radar ;
- les moyens à roue libre et à limiteur de couple à débrayage sont interposés entre le pignon et un arbre du motoréducteur correspondant ;
- les moyens de liaison comprennent deux manchons d'embrayage complémentaires et associés l'un au pignon et l'autre au motoréducteur et entre lesquels sont placés les moyens à limiteur de couple et les moyens à roue libre ;
- les moyens à limiteur de couple comprennent des organes débrayables ;
- les moyens à limiteur de couple comprennent des organes sécables.

L'invention sera mieux comprise à la lecture de la description qui va suivre, donnée uniquement à titre d'exemple, et faite en se référant aux dessins annexés, sur lesquels :
- la figure 1 représente une vue en coupe schématique, illustrant une structure d'accouplement de l'état de la technique entre des motoréducteurs et une structure d'aérien ;
- la figure 2 représente un schéma synoptique illustrant l'implantation de moyens de liaison dans une structure de radar selon l'invention ;
- la figure 3 représente une vue fonctionnelle de détail de tels moyens de liaison ; et
- la figure 4 illustre le comportement d'une telle structure vis-à-vis d'un couple transmis lorsque l'un des motoréducteurs fonctionne en frein.

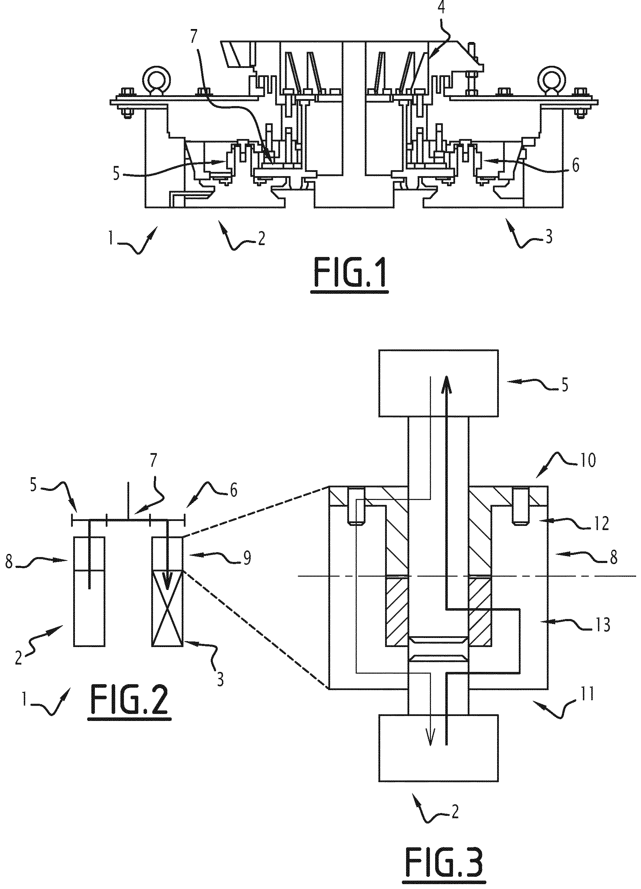

On a en effet illustré sur la figure 1, une partie d'une structure de radar selon l'invention.

Cette structure de radar est désignée par la référence générale 1, et comporte au moins deux motoréducteurs par exemple électriques, désignés par les références générales 2 et 3 sur ces figures.

Ces motoréducteurs électriques sont reliés, à travers des moyens de liaison, à une structure d'aérien radar, désignée par la référence générale 4 sur cette figure.

En fait et de façon classique, chaque motoréducteur 2 et 3, peut être associé à un pignon, respectivement 5 et 6, ces pignons étant eux-mêmes accouplés à une roue dentée unique et commune, désignée par la référence générale 7, et associée à la structure d'aérien.

Cette structure générale de radar présente les différents inconvénients qui ont été mentionnés dans le préambule de la présente description.

Pour résoudre les différents problèmes évoqués, dans la structure de radar selon l'invention, les motoréducteurs sont associés à la structure d'aérien radar, par des moyens de liaison qui comprennent, pour chaque motoréducteur, des moyens d'accouplement à roue libre fonctionnant en parallèle avec des moyens à limiteur de couple à débrayage.

On a par exemple illustré schématiquement sur la figure 2, une structure 1 reprenant les différents éléments décrits en regard de la figure 1, comme par exemple les motoréducteurs 2, 3, les pignons associés à ceux-ci, 5 et 6, et la roue dentée 7, reliée à la structure d'aérien.

Selon l'invention, il est prévu des moyens de liaison particuliers entre chaque motoréducteur et le pignon correspondant.

Ces moyens de liaison comprennent, comme cela a été indiqué précédemment, pour chaque motoréducteur, des moyens d'accouplement à roue libre fonctionnant en parallèle avec des moyens à limiteur de couple à débrayage.

Ces moyens de liaison sont désignés par les références générales 8 et 9 sur cette figure 2.

On conçoit alors que les moyens à roue libre et à limiteur de couple à débrayage sont interposés entre le pignon et un arbre du motoréducteur correspondant.

On a illustré ces moyens de façon plus détaillée sur la figure 3.

A titre d'exemple, on a illustré les moyens de liaison 8, qui sont alors interposés entre le motoréducteur 2 et le pignon 5.

En fait, ces moyens de liaison 8 comprennent par exemple deux manchons 10 et 11.

Le manchon 10 est associé par exemple à des organes tels que des billes ou des pions débrayables dont l'un est désigné par la référence 12, pour former le limiteur à débrayage.

Les moyens à roue libre sont quant à eux désignés par la référence générale 13 sur cette figure 3.

Ainsi le manchon 11 fait la liaison entre l'arbre moteur et l'ensemble roue libre-limiteur de couple à débrayage, qui est lui-même par exemple monté sur l'arbre du pignon.

Bien entendu d'autres modes de réalisation et d'autres technologies de système de débrayage peuvent être envisagés.

Ainsi par exemple des organes tels que des pions sécables peuvent également être utilisés.

Ainsi la structure de radar selon l'invention comporte une roue libre et un limiteur de couple à débrayage, montés sur le même arbre et donc travaillant en parallèle, pour chaque motoréducteur.

La roue libre permet de passer un premier couple C1, correspondant au couple moteur maximum et le limiteur de couple à débrayage permet de passer un deuxième couple C2, correspondant au couple fonctionnel maximal.

Le deuxième couple C2 est alors bien entendu inférieur au premier couple C1.

En cas de blocage, le motoréducteur bloqué freine la rotation de l'ensemble et le moteur toujours opérationnel continue à faire tourner cet ensemble.

Les couples sur les arbres des moteurs sont alors égaux et de signes opposés.

Ces couples augmentent jusqu'à atteindre la valeur C1.

Une fois la valeur C1 atteinte, le motoréducteur bloqué est désaccouplé.

Le motoréducteur toujours opérationnel peut alors continuer à fonctionner.

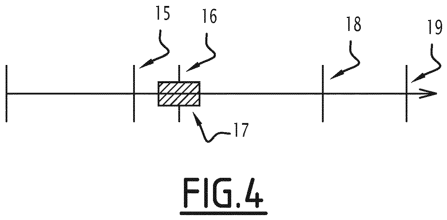

Ceci est illustré par exemple sur la figure 4, qui montre le comportement du système et notamment le couple sur le pignon.

En 15, on a représenté la limite opérationnelle du moteur.

En 16, on a représenté le limiteur de couple à débrayage avec sa plage de tolérance de fonctionnement en 17.

En 18, on a illustré la capacité moteur qui est égale à la capacité de roue libre, et en 19, on a représenté la limite de la chaîne cinématique de transmission.

On conçoit alors qu'une telle structure présente un certain nombre d'avantages par rapport aux structures de l'état de la technique, notamment au niveau de la sécurité et de la fiabilité de fonctionnement de l'ensemble.

Ceci permet en effet d'assurer la continuité de service même en cas de blocage de l'un des motoréducteurs.

Bien entendu différents modes de réalisation des moyens décrits peuvent également être envisagés.

## Revendications

1. Structure de radar (1) du type comportant au moins deux motoréducteurs (2, 3) associés à travers des moyens de liaison (8, 9) à une structure d'aérien radar (4), les moyens de liaison comprennent pour chaque motoréducteur des moyens d'accouplement à roue libre (13) **caractérisée en ce que** les moyens d'accouplement à roue libre (13) fonctionnant en parallèle avec des moyens à limiteur de couple à débrayage (12).

2. Structure de radar selon la revendication 1, **caractérisée en ce que** les moyens à roue libre (13) sont adaptés pour passer un premier couple (C1) correspondant au couple moteur maximum et les moyens à limiteur de couple à débrayage (12) permettent de passer un deuxième couple (C2) correspondant au couple fonctionnel maximum, avec le deuxième couple inférieur au premier couple.

3. Structure de radar selon la revendication 1 ou 2, **caractérisée en ce que** les moyens de liaison comprennent en outre un pignon (5, 6) pour chaque motoréducteur (2, 3), associé à une roue dentée commune (7), reliée à la structure d'aérien radar (4).

4. Structure de radar selon la revendication 3, **caractérisée en ce que** les moyens à roue libre (13) et à limiteur de couple à débrayage (12) sont interposés entre le pignon (5, 6) et un arbre du motoréducteur (2, 3) correspondant.

5. Structure de radar selon la revendication 3 ou 4, **caractérisée en ce que** les moyens de liaison comprennent deux manchons d'embrayage complémentaires (10, 11) et associés l'un (10) au pignon (5) et l'autre (11) au motoréducteur (2) et entre lesquels sont placés les moyens à limiteur de couple (12) et les moyens à roue libre (13).

6. Structure de radar selon la revendication 5, **caractérisée en ce que** les moyens à limiteur de couple (12) comprennent des organes débrayables.

7. Structure de radar selon la revendication 5, **caractérisée en ce que** les moyens à limiteur de couple (12) comprennent des organes sécables.

## Patentansprüche

1. Radareinrichtung (1) des Typs, der aufweist wenigstens zwei Getriebemotoren (2, 3), die über Verbindungsmittel (8, 9) mit einer Luftradareinrichtung (4) verbunden sind, wobei die Verbindungsmittel für jeden Getriebemotor Freilaufkupplungs-Mittel (13) aufweisen, **dadurch gekennzeichnet, dass** die Freilaufkupplungs-Mittel (13) parallel mit Auskuppel-Drehmomentbegrenzer-Mitteln (12) arbeiten.

2. Radareinrichtung gemäß Anspruch 1, **dadurch gekennzeichnet, dass** die Freilaufkupplungs-Mittel (13) angepasst sind, um ein erstes Drehmoment (C1) zu übertragen, das zu dem Maximalmotordrehmoment korrespondiert, und die Auskuppel-Drehmomentbegrenzer-Mittel (12) es erlauben, ein zweites Drehmoment (C2) zu übertragen, das zu dem Maximalarbeitsdrehmoment korrespondiert, wobei das zweite Drehmoment kleiner als das erste Drehmoment ist.

3. Radareinrichtung gemäß Anspruch 1 oder 2, **dadurch gekennzeichnet, dass** die Verbindungsmittel ferner für jeden Getriebemotor (2, 3) ein Ritzel (5, 6) aufweisen, das mit einem gemeinsamen Zahnrad (7) verbunden ist, welches mit der Luftradarstation (4) verbunden ist.

4. Radareinrichtung gemäß Anspruch 3, **dadurch gekennzeichnet, dass** die Freilaufkupplungs-Mittel (13) und die Auskuppel-Drehmomentbegrenzer-Mittel (12) zwischen das Ritzel (5, 6) und eine korrespondierende Welle des Getriebemotors (2, 3) zwischengeschaltet sind.

5. Radareinrichtung gemäß Anspruch 3 oder 4, **dadurch gekennzeichnet, dass** die Verbindungsmittel zwei komplementäre Auskuppel-Hülsen (10, 11) aufweisen, von denen eine (10) mit dem Ritzel (5) und die andere (11) mit Getriebemotor (2) verbunden ist und zwischen denen die Auskuppel-Drehmomentbegrenzer-Mittel (12) und die Freilaufkupplungs-Mittel (13) angeordnet sind.

6. Radareinrichtung gemäß Anspruch 5, **dadurch gekennzeichnet, dass** die Auskuppel-Drehmomentbegrenzer-Mittel (12) auskuppelbare Organe aufweisen.

7. Radareinrichtung gemäß Anspruch 5, **dadurch gekennzeichnet, dass** die Auskuppel-Drehmomentbegrenzer-Mittel (12) trennbare Organe aufweist.

## Claims

1. Radar structure (1) of the type comprising at least two gear motors (2, 3) which are associated through linking means (8, 9) with a radar aerial structure (4), the linking means comprise, for each gear motor, coupling means having a freewheel (13), **characterised in that** the coupling means having a freewheel (13) operating in parallel with means having a torque limiter with disengagement (12).

2. Radar structure according to claim 1, **characterised in that** the means having a freewheel (13) are adapted to pass a first torque (C1) corresponding to the maximum motor torque, and the means having a torque limiter with disengagement (12) allow a second torque (C2) corresponding to the maximum functional torque to pass, with the second torque being lower than the first torque.

3. Radar structure according to claim 1 or 2, **characterised in that** the linking means further comprise a pinion (5, 6) for each gear motor (2, 3), which pinion is associated with a common toothed wheel (7) connected to the radar aerial structure (4).

4. Radar structure according to claim 3, **characterised in that** the means having a freewheel (13) and the means having a torque limiter with disengagement (12) are interposed between the pinion (5, 6) and a shaft of the corresponding gear motor (2, 3).

5. Radar structure according to claim 3 or 4, **characterised in that** the linking means comprise two complementary clutch sleeves (10, 11), of which one (10) is associated with the pinion (5) and the other (11) with the gear motor (2) and between which the means having a torque limiter (12) and the means having a freewheel (13) are placed.

6. Radar structure according to claim 5, **characterised in that** the means having a torque limiter (12) comprise disengageable members.

7. Radar structure according to claim 5, **characterised in that** the means having a torque limiter (12) comprise breakable members.
